# EUROPEAN PATENT SPECIFICATION

(11) **EP 4 151 361 B1**
(45) Date of publication and mention of the grant of the patent: **06.05.2026**
(21) Application number: 20938662.2
(22) Date of filing: 05.06.2020
(51) Int. Cl.: B23Q 41/00, B23Q 3/155, B23Q 3/157, B23Q 11/08

(54) **MAGAZINE AND MACHINE TOOL**
MAGAZIN UND WERKZEUGMASCHINE
MAGASIN ET MACHINE-OUTIL

(43) Date of publication of application: 22.03.2023
(73) Proprietor: DMG Mori Co., Ltd., Yamatokoriyama-shi, Nara 639-1160 (JP)
(72) Inventor: MURATA, Masaki, Yamatokoriyama-shi, Nara 639-1160 (JP)
(74) Representative: Isarpatent
(86) International application number: PCT/JP2020/022286
(87) International publication number: WO 2021/245911

(56) References cited:
- WO-A1-2020/012547
- JP-A- 2005 305 602
- JP-A- 2017 535 829
- JP-A- H 071 272
- JP-A- H02 252 004
- JP-A- H04 357 503
- JP-A- H05 233 049
- JP-A- S62 218 037

## Description

### TECHNICAL FIELD

The present invention relates to a magazine and a machine tool.

### BACKGROUND ART

For example, Japanese Patent Application Laying-Open No. 2019-42878 (PTL 1) discloses a tool magazine comprising a first conveyer unit and a second conveyer unit that hold a plurality of tools such as drills, end mills, milling cutters, etc. detachably and convey the tools along an endless path, and a cover body that accommodates the first and second conveyer units. The cover body is provided with a first opening and a second opening for manually attaching and detaching a tool to and from the first conveyer unit and the second conveyer unit, respectively. In addition, International Patent Publication No. WO 2020/012547 A1 (PTL 2) provides a numerical control device that displays tool data necessary for replacement.

### CITATION LIST

### PATENT LITERATURE

PTL 1: Japanese Patent Laying-Open No. 2019-42878
PTL 2: International Patent Publication No. WO 2020/012547 A1

### SUMMARY OF INVENTION

### TECHNICAL PROBLEM

As disclosed in PTL 1, in a magazine mounted in a machine tool, when a type of tool used to process a workpiece is changed or a tool has reached its end of life, a tool stored in the magazine may be replaced manually. In that case, it is required that a manual tool attachment/detachment operation be performed easily and appropriately.

Accordingly, it is an object of the present invention to solve the above problem, and provide a magazine that allows a manual tool attachment/detachment operation to be easily and appropriately performed, and a machine tool comprising such a magazine.

### SOLUTION TO PROBLEM

The present invention is set out by the appended claims. A magazine according to the present invention comprises: a conveyer unit that has a plurality of tool holders that each hold a tool detachably and conveys the plurality of tool holders; and a cover body that accommodates the conveyer unit. The conveyer unit allows a tool to be manually attached to and detached from a tool holder conveyed to a predetermined position. The magazine further comprises a display unit that is provided inside the cover body and displays a first design. The first design represents an arc or circumference for a diameter corresponding to a maximum diameter of a tool which can be held by the tool holder.

According to the thus configured magazine, when an operator manually attaches a tool to a tool holder, the operator can intuitively recognize a maximum diameter of a tool which can be held by the tool holder by confirming an arc or circumference represented by the first design that the display unit displays. A manual tool attachment/detachment operation can thus be performed easily and appropriately.

Preferably, the tool holder conveyed to the predetermined position receives or has a tool removed therefrom along a predetermined center axis. The display unit has a display surface that is composed of a plane orthogonal to an axial direction of the predetermined center axis and displays the first design.

According to the thus configured magazine, when the operator performs an operation to attach/detach a tool at a position opposite to a tool holder in the axial direction of the predetermined center axis, the operator more easily confirms the arc or circumference represented by the first design displayed on the display surface.

Preferably, the display unit is provided sideways of the predetermined position. The arc or circumference has a center point aligned in level to the predetermined center axis.

According to the thus configured magazine, when the operator manually attaches a tool to a tool holder, the operator can easily compare the tool in size with the arc or circumference represented by the first design that the display unit displays.

Preferably, the display unit further displays a maximum diameter of a tool which can be held by the tool holder. According to the thus configured magazine, the operator can accurately recognize the maximum diameter of the tool that can be held by the tool holder.

Preferably, the cover body is provided with an opening that allows a tool to be manually attached/detached to/from the tool holder conveyed to the predetermined position. The display unit has at least a portion opposite to an opening plane defined by the opening in the cover body.

According to the thus configured magazine, the operator can easily confirm through the opening plane defined by the opening in the cover body the arc or circumference represented by the first design that the display unit displays.

Preferably, the display unit further displays first information in a variable display form about a tool held by a tool holder and/or the conveyer unit.

According to the thus configured magazine, when the operator manually attaches/detaches a tool to/from a tool holder, the operator can recognize the first information about the tool held by the tool holder and/or the conveyer unit by confirming a display form at the display unit. Thus, the manual tool attachment/detachment operation can be performed more easily and appropriately.

Preferably, the first information includes at least one of: whether a tool is present or absent in a tool holder conveyed to the predetermined position; how a tool is clamped in the tool holder conveyed to the predetermined position; and in what state the conveyer unit is operated to convey the tool holder.

According to the thus configured magazine, the operator can recognize the first information by confirming the display form at the display unit.

Preferably, the display unit includes a plate material including a light transmitting portion, and a light emitting device that emits light from a back side of the plate material toward the light transmitting portion in a plurality of light emitting modes.

According to the thus configured magazine, the variable display form at the display unit can be implemented according to the light emitting modes of the light emitting device confirmed in the light transmitting portion.

Preferably, the plurality of light emitting modes include a light emitting mode in a specific light emitting state selected from turning on light, turning off light, and flashing. Preferably, the plurality of light emitting modes include a light emitting mode of a specific light emitting color selected from a plurality of colors.

According to the thus configured magazine, the variable display form at the display unit can be implemented according to these light emitting state and/or light emitting color confirmed in the light transmitting portion.

Preferably, the plate material further displays second information including at least one of: an indicator indicating the predetermined position; a specification of a shank of a tool held by a tool holder; and an orientation of the tool held by the tool holder that is about an axis of rotation of the tool.

According to the thus configured magazine, when the operator manually attaches/detaches a tool to/from a tool holder the operator can recognize the second information by confirming the plate material. Thus, the manual tool attachment/detachment operation can be performed more easily and appropriately.

Preferably, at least one of: an indicator indicating the predetermined position; a specification of a shank of a tool held by a tool holder; and an orientation of the tool held by the tool holder that is about an axis of rotation of the tool is represented by a second design. The light transmitting portion corresponds to the second design.

According to the thus configured magazine, the operator can easily recognize the second information that is represented by the second design as the light emitting device emits light toward the light transmitting portion.

A machine tool according to the present invention comprises any magazine as described above. The thus configured machine tool can be implemented to allow a manual tool attachment/detachment operation to be easily and appropriately performed in the magazine.

### ADVANTAGEOUS EFFECTS OF INVENTION

The present invention can thus provide a magazine that allows a manual tool attachment/detachment operation to be easily and appropriately performed, and a machine tool comprising such a magazine.

### BRIEF DESCRIPTION OF DRAWINGS

Fig. 1 is a perspective view of a machine tool comprising a magazine according to a first embodiment of the present invention.
Fig. 2 is a front view of the magazine of a portion surrounded by a two-dot chain line II indicated in Fig. 1.
Fig. 3 is a cross section of the magazine taken along and seen in a direction indicated by an arrow of a line III-III indicated in Fig. 2.
Fig. 4 is a front view of a display unit shown in Fig. 2.
Fig. 5 is a front view indicating a first light emitting mode in a light emitting device.
Fig. 6 is a front view indicating a second light emitting mode in the light emitting device.
Fig. 7 is a front view indicating a third light emitting mode in the light emitting device.
Fig. 8 is a front view indicating a fourth light emitting mode in the light emitting device.
Fig. 9 is a front view of a display unit comprised in a magazine according to a second embodiment of the present invention.
Fig. 10 is a front view of a display unit comprised in a magazine according to a third embodiment of the present invention.
Fig. 11 is a perspective view of a magazine according to a fourth embodiment of the present invention.

### DESCRIPTION OF EMBODIMENTS

Embodiments of the present invention will now be described with reference to the drawings. In the figures referenced below, identical or equivalent members are identically denoted.

### First Embodiment

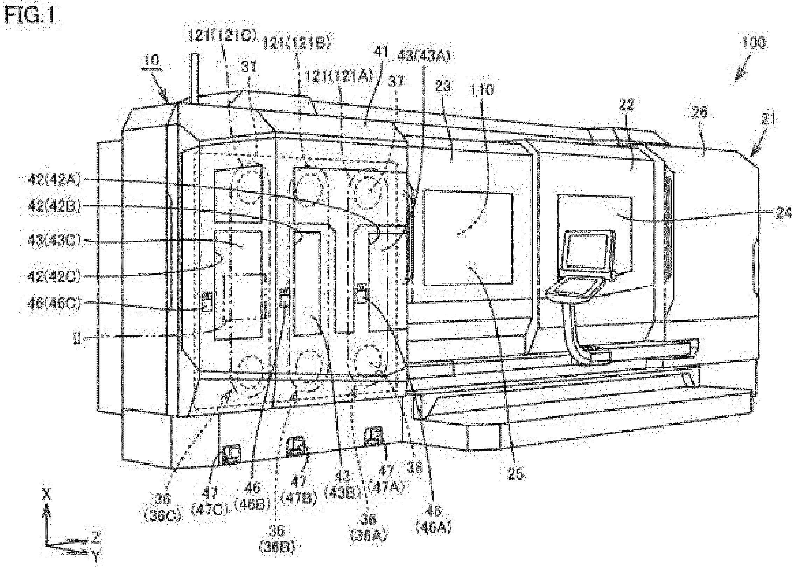

Fig. 1 is a perspective view of a machine tool comprising a magazine according to a first embodiment of the present invention. Referring to Fig. 1, a machine tool 100 is a numerically control (NC) machine tool in which a variety of types of operations for processing a workpiece are automated through numerical control by a computer. Machine tool 100 is a composite processing machine having a turning function using a fixed tool and a milling function using a rotating tool.

In the present specification, an axis parallel to a rightward/leftward direction (or widthwise direction) of machine tool 100 and extending in a horizontal direction is referred to as a "Z axis," an axis parallel to a frontward/rearward direction (or depthwise direction) of machine tool 100 and extending in a horizontal direction is referred to as a "Y axis," and an axis extending in a vertical direction is referred to as an "X axis." In Fig. 1, a rightward direction is referred to as a "+ Z-axis direction" and a leftward direction is referred to as a "-Z-axis direction." In Fig. 1, a frontward direction with respect to the sheet of the figure is referred to as a "+ Y-axis direction" and a rearward direction with respect thereto is referred to as a "- Y-axis direction." In Fig. 1, an upward direction is referred to as a "+ X-axis direction," and a downward direction is referred to as a "- X-axis direction." The X-axis, the Y-axis, and the Z-axis are three axes orthogonal to one another.

Machine tool 100 generally has a structure, as will be briefly described below. Machine tool 100 comprises a workpiece spindle and an opposite workpiece spindle for rotating a workpiece, a tool spindle for rotating a tool, a tool rest on which a plurality of tools are attached, a magazine 10 for accommodating a plurality of tools, and an automatic tool exchanger (ATC) for exchanging tools between magazine 10 and the tool spindle.

Machine tool 100 further comprises a cover body 21. Cover body 21 defines a processing area 110 and configures an external appearance of machine tool 100. Processing area 110 is a space in which a workpiece is processed and which is generally sealed so as to prevent foreign matters such as chips or cutting oil from leaking outside processing area 110 as the workpiece is processed.

Cover body 21 includes a first door 22, a second door 23, a side cover 26, and a magazine cover 41.

Cover body 21 is provided with an opening that opens processing area 110 in the + Y-axis direction (or a frontward direction with respect to the machine) and the + X-axis direction (or an upward direction). First door 22 and second door 23 are disposed in the opening provided in cover body 21. Side cover 26 and magazine cover 41 are provided on sides, respectively, opposite in the Z-axis direction to the opening provided in cover body 21.

First door 22 and second door 23 are slidable in the Z-axis direction between a closed position in which the opening provided in cover body 21 is closed and an open position in which the opening provided in cover body 21 is opened. First door 22 and second door 23 define processing area 110 when the doors are slid to the closed position. First door 22 and second door 23 are provided with a transparent window 24 and a transparent window 25, respectively. When first door 22 and second door 23 are slid to the open position, first door 22 and second door 23 overlap with side cover 26 in the Y-axis direction.

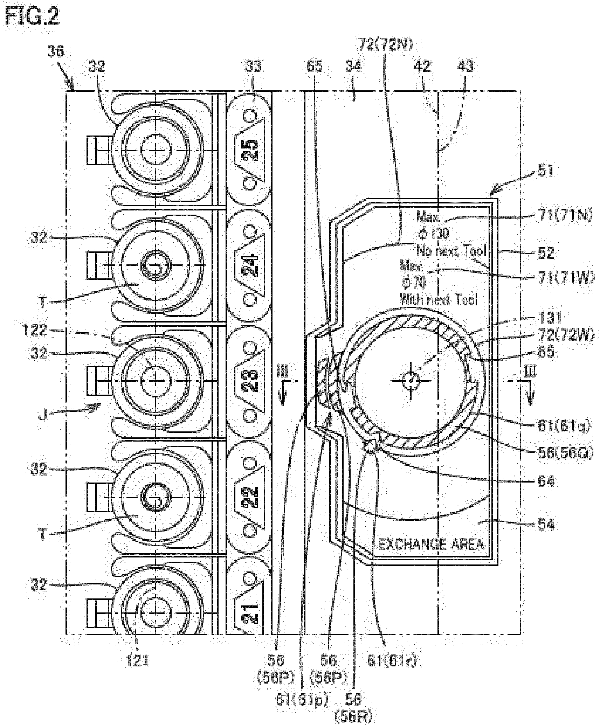

Hereinafter, a structure of magazine 10 will be described in detail. Fig. 2 is a front view of the magazine of a portion surrounded by a two-dot chain line II indicated in Fig. 1. Fig. 2 shows an inside of magazine cover 41.

Referring to Figs. 1 and 2, magazine 10 is provided outside processing area 110. Magazine 10 is provided on a side opposite in the Z-axis direction to side cover 26 with first door 22 and second door 23 interposed. Magazine 10 accommodates a plurality of tools such as a drill, an end mill, a milling cutter, etc. to be attached to the tool spindle. In the present embodiment, magazine 10 accommodates tools having a shank with a specification according to the HSK.

Magazine 10 comprises a magazine base 31, a conveyer unit 36, and magazine cover 41 described above (or the cover body).

Magazine base 31 is provided as a base member of magazine 10. Conveyer unit 36 is supported by magazine base 31. Magazine cover 41 is attached to magazine base 31. Magazine cover 41 forms a space with magazine base 31 for accommodating conveyer unit 36. Magazine cover 41 forms an external appearance of magazine 10 in a front view of magazine 10.

Conveyer unit 36 includes a plurality of tool pots 32 (or tool holders). Tool pot 32 is configured to hold a tool detachably. Conveyer unit 36 is configured to convey the plurality of tool pots 32 along an endless path 121.

Conveyer unit 36 further includes a conveying chain 33, a driving sprocket 37, a driven sprocket 38, and a motor (not shown).

Driving sprocket 37 and driven sprocket 38 are spaced from each other. Driving sprocket 37 and driven sprocket 38 are spaced from each other in the X-axis direction (or a vertical direction). An output shaft of the motor is connected to driving sprocket 37 via a speed reducer. Conveying chain 33 is disposed annularly along path 121. Conveying chain 33 engages with and extends between driving sprocket 37 and driven sprocket 38.

As shown in Fig. 2, the plurality of tool pots 32 are coupled with one another via conveying chain 33. The plurality of tool pots 32 are disposed along path 121 at equal pitches. The plurality of tool pots 32 are disposed to be radially outer than annularly disposed conveying chain 33. Conveying chain 33 is circumferentially assigned consecutive numbers and provided with number tags each indicating the number of a tool pot 32.

Tool pot 32 is in the form of a cylinder that can receive a tool and has a center axis 122 parallel to the Y-axis direction as a center. Path 121 extends between tool pots 32 across center axis 122 of each tool pot 32. Tool pot 32 has a clamping mechanism unit incorporated therein for clamping a tool by spring force or the like.

Driving sprocket 37 rotates as rotation from the motor is transmitted to driving sprocket 37. As driving sprocket 37 rotates, conveying chain 33 moves in the circumferential direction and the plurality of tool pots 32 are conveyed along path 121.

Magazine 10 comprises a plurality of conveyer units 36 (36A, 36B, 36C). Conveyer unit 36A is configured to convey a plurality of tool pots 32 along an endless path 121A. Conveyer unit 36B is configured to convey a plurality of tool pots 32 along an endless path 121B. Conveyer unit 36C is configured to convey a plurality of tool pots 32 along an endless path 121C.

Conveyer units 36A, 36B, and 36C are provided independently of one another. Conveyer units 36A, 36B, and 36C are aligned in a horizontal direction (or the Z-axis direction). Conveyer units 36A, 36B, and 36C are provided such that paths 121A, 121B, and 121C are located in the same plane (i.e., the X-Z plane).

Path 121 has a vertically elongate shape in which the X-axis direction (or a vertical direction) is a longitudinal direction and the Z-axis direction (or a horizontal direction) is a lateral direction. Path 121 is in the form of a track. Paths 121A, 121B, and 121C have the same shape. Paths 121A, 121B, and 121C may have different shapes.

As an example, conveyer units 36A, 36B, and 36C accommodate tool groups used for processing different workpieces. A topmost portion of path 121 corresponds to a tool invoking position at which a tool fed from conveyer unit 36 to processing area 110 is positioned.

The tool fed from conveyer unit 36 to processing area 110 moves from the current position of the tool to the tool invoking position as tool pot 32 is conveyed. In doing so, tool pot 32 is conveyed in one direction selected from a forward direction along path 121 or the opposite direction along path 121 so that the tool moves a short distance from the current position to the tool invoking position. The tool positioned at the tool invoking position is transported toward processing area 110 by an automatic tool exchanger (not shown).

Magazine 10 may have a plurality of conveyer units 36 other than three conveyer units 36 or may have a single conveyer unit 36. Further, for a machine tool comprising a tool rest provided with an ATC function, the magazine may accommodate a plurality of tools attached to the tool rest.

Conveyer unit 36 is configured so that a tool can be manually attached/detached to/from tool pot 32 conveyed to a predetermined position J. Conveyer unit 36 shown in Fig. 2 has tool pot 32 No. 23 positioned at predetermined position J. Along center axis 122 (or a predetermined center axis), a tool is inserted into or removed from tool pot 32 conveyed to predetermined position J. When a tool is held by tool pot 32, the center axis of the shank of the tool matches center axis 122 of tool pot 32.

Magazine cover 41 is provided with an opening 42 for manually attaching/detaching a tool to/from tool pot 32 conveyed to predetermined position J. Opening 42 allows a space for accommodating conveyer unit 36 and a space external thereto to be in communication with each other. Opening 42 is open in the + Y axis direction (or the frontward direction with respect to the machine). Opening 42 is open opposite to tool pot 32 conveyed to predetermined position J.

Predetermined position J corresponds to a linear portion of path 121 in the form of a track. Predetermined position J is positioned below the tool invoking position. Predetermined position J is not particularly limited as long as it is at a level at which the operator's hand can easily reach predetermined position J.

Magazine cover 41 includes a magazine door 43. Magazine door 43 is disposed in opening 42. Magazine door 43 is provided to be openable and closable between a closed position in which opening 42 is closed and an open position in which opening 42 is opened. Magazine door 43 may be opened/closed in any manner, and may for example be slid in a vertical direction or pivot about a vertically extending axis. Magazine door 43 may be composed of a transparent member.

Magazine 10 further comprises a first operation unit 46 and a second operation unit 47. First operation unit 46 is operated when the operator indicates an operation of conveyer unit 36. First operation unit 46 is provided on magazine cover 41. First operation unit 46 is provided at a position adjacent to opening 42. First operation unit 46 is aligned with opening 42 in the Z-axis direction.

First operation unit 46 may include an operating section for switching the conveyance of tool pot 32 in the conveyance unit 36 from an automatic mode (a mode according to a program executed by machine tool 100) to a manual mode. First operation unit 46 in the manual mode may include an operating section for identifying the number of tool pot 32 conveyed to predetermined position J. First operation unit 46 in the manual mode may include an operating section for starting the conveyance of tool pot 32. First operation unit 46 may for example be a touch panel or a push button.

Second operation unit 47 is operated when the operator causes a clamping mechanism unit to perform an unclamping operation for tool pot 32 conveyed to predetermined position J. Second operation unit 47 is a foot switch.

First operation unit 46 may be configured to include an operating section for causing the clamping mechanism unit to perform the unclamping operation. There may be no operation unit operated when the clamping mechanism unit is caused to perform the unclamping operation, and instead the operator may use a jig or the like to pull out a tool from tool pot 32.

Magazine cover 41 is provided with a plurality of openings 42 (42A, 42B, 42C). Openings 42A, 42B, and 42C are provided for manual attachment and detachment of tools to and from conveyer units 36A, 36B, and 36C, respectively. Magazine cover 41 includes a plurality of magazine doors 43 (43A, 43B, and 43C). Magazine doors 43A, 43B, and 43C are disposed in openings 42A, 42B, and 42C, respectively.

Magazine 10 comprises a plurality of first operation units 46 (46A, 46B, 46C) and a plurality of second operation units 47 (47A, 47B, 47C). First operation units 46A, 46B and 46C are operated when the operator indicates operations of conveyer units 36A, 36B and 36C, respectively. Second operation units 47A, 47B and 47C are operated when the operator causes the clamping mechanism unit to perform the unclamping operation in conveyer units 36A, 36B, and 36C, respectively.

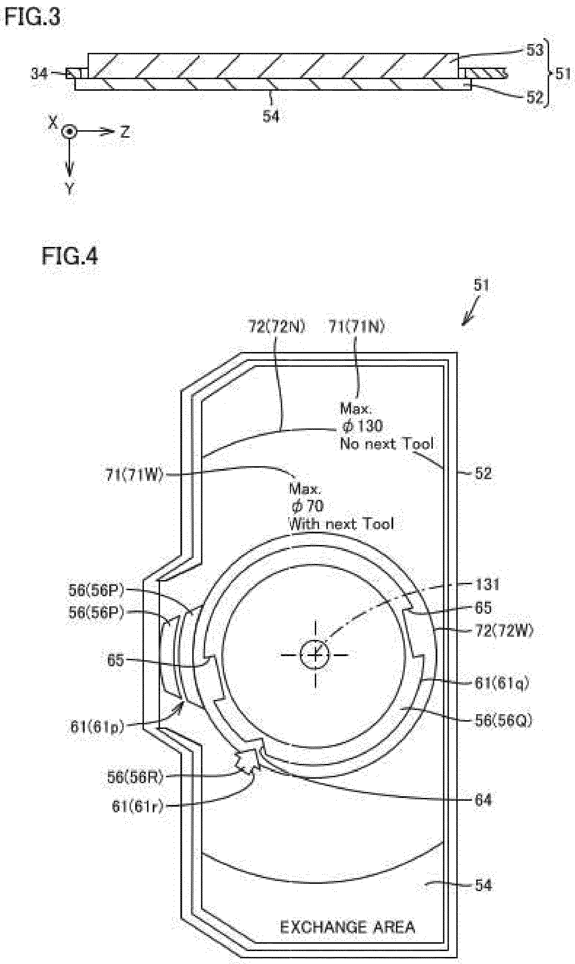

Fig. 3 is a cross section of the magazine taken along and seen in a direction indicated by an arrow of a line III-III indicated in Fig. 2. Fig. 4 is a front view of a display unit shown in Fig. 2. Referring to Figs. 2 to 4, magazine 10 further comprises a display unit 51.

Display unit 51 has a display surface 54. Display surface 54 is in the form of a plane. Display surface 54 displays characters 71, a first design 72, etc. described hereinafter.

Display unit 51 is provided inside magazine cover 41. Display unit 51 is provided sideways of predetermined position J. Display unit 51 is provided adjacent to predetermined position J. Display unit 51 is provided adjacent to predetermined position J in the Z-axis direction. Display unit 51 is disposed inside the ring formed of the plurality of tool pots 32. A number tag indicating the number of tool pot 32 positioned at predetermined position J is disposed between display unit 51 and tool pot 32 positioned at predetermined position J. When magazine 10 is seen in a front view, tool pot 32 positioned at predetermined position J is located between display unit 51 and first operation unit 46 shown in Fig. 1.

Display surface 54 is composed of a plane orthogonal to center axis 122 of tool pot 32 positioned at predetermined position J. Display surface 54 may be composed of a plane inclined with respect to center axis 122 of tool pot 32 positioned at predetermined position J.

Magazine 10 further comprises a decorative panel 34. Decorative panel 34 is in the form of a plate parallel to the X-Z plane. Decorative panel 34 is disposed inside the ring formed of the plurality of tool pots 32. Display unit 51 is attached to decorative panel 34.

Display unit 51 has at least a portion opposite to an opening plane defined by opening 42 in magazine cover 41. In the present embodiment, display unit 51 (or display surface 54) has a portion opposite to the opening plane defined by opening 42 in magazine cover 41. The portion of display surface 54 opposite to the opening plane defined by opening 42 is larger in area than the remaining portion of display surface 54 that is not opposite to the opening plane defined by opening 42 (or is opposite to magazine cover 41).

Display unit 51 may be disposed outside the ring formed of the plurality of tool pots 32. Display surface 54 may entirely be opposite to the opening plane defined by opening 42. The portion of display surface 54 opposite to the opening plane defined by opening 42 may have an area equal to or smaller than that of the remaining portion of display surface 54 that is not opposite to the opening plane defined by opening 42. Display unit 51 may be provided such that display surface 54 and the opening plane defined by opening 42 in magazine cover 41 are orthogonal to each other.

Display unit 51 (or display surface 54) displays characters 71 (71N, 71W) and first design 72 (72N, 72W).

Characters 71 indicate a maximum diameter of a tool which can be held by tool pot 32. In particular, characters 71N indicate a maximum diameter of a tool which can be held by tool pot 32 positioned at predetermined position J when no tool is attached to tool pot 32 adjacent to tool pot 32 positioned at predetermined position J. Characters 71W indicate a maximum diameter of a tool which can be held by tool pot 32 positioned at predetermined position J when a tool is attached to tool pot 32 adjacent to tool pot 32 positioned at predetermined position J.

For example, in the example shown in Fig. 2, when tool pots 32 Nos. 22 and 24 have no tool attached thereto, tool pot 32 No. 23 can hold a tool having a diameter of 130 mm. In contrast, when at least one of tool pots 32 Nos. 22 and 24 has a tool attached thereto, tool pot 32 No. 23 can hold a tool having a diameter of 70 mm.

First design 72 represents an arc or circumference for a diameter corresponding to a maximum diameter of a tool which can be held by tool pot 32. The diameter for the arc or circumference represented by first design 72 is the same as the maximum diameter of the tool that can be held by tool pot 32.

First design 72N is an arc for a diameter (130 mm) corresponding to a maximum diameter of a tool which can be held by tool pot 32 positioned at predetermined position J when no tool is attached to tool pot 32 adjacent to tool pot 32 positioned at predetermined position J. First design 72N is an arc about a center point 131. First design 72N is composed of two arcs divided in the X-axis direction (or the vertical direction). The two arcs are divided at a location at which predetermined position J and display unit 51 are opposite to each other.

First design 72W is a circumference for a diameter (70 mm) corresponding to a maximum diameter of a tool which can be held by tool pot 32 positioned at predetermined position J when a tool is attached to tool pot 32 adjacent to tool pot 32 positioned at predetermined position J. First design 72W is a circumference about center point 131.

As shown in Fig. 2, center point 131 for the arc or circumference represented by first design 72 is aligned in level with center axis 122 of tool pot 32 positioned at predetermined position J. The level of center point 131 and center axis 122 is a level when a common horizontal plane is set as a reference, and it is for example a level when a surface of a floor on which machine tool 100 (or magazine 10) is installed is used as a reference. Center point 131 for the arc or circumference represented by first design 72 is located on a straight line that is an extension in the Z-axis direction of center axis 122 of tool pot 32 positioned at predetermined position J.

Characters 71N overlap with first design 72N or are disposed in the vicinity of first design 72N. Characters 71W overlap with first design 72W or are disposed in the vicinity of first design 72W.

If the plurality of tool pots 32 are conveyed in a horizontal direction at a manual tool exchanging position, or predetermined position J, a configuration in which display unit 51 is provided above or below tool pot 32 positioned at predetermined position J is envisaged. In such a case, center point 131 for the arc or circumference represented by first design 72 may be located on a straight line that is an extension in the X-axis direction (or the vertical direction) of center axis 122 of tool pot 32 positioned at predetermined position J.

First design 72N may be a circumference about center point 131. First design 72W may be an arc about center point 131. Display unit 51 may display only one of first designs 72N and 72W.

According to this configuration, when the operator manually attaches a tool to tool pot 32, the operator can intuitively recognize a maximum diameter of a tool which can be held by tool pot 32 by confirming the arc or circumference represented by first design 72 that display unit 51 displays. Further, the operator can accurately recognize the maximum diameter of the tool that can be held by tool pot 32 by confirming characters 71 that display unit 51 displays. Thus, the operator can easily and appropriately perform the manual tool attachment/detachment operation.

Further, display surface 54 is composed of a plane orthogonal to center axis 122 of tool pot 32 positioned at predetermined position J. Thus, when the operator performs an operation to attach/detach a tool at a position opposite to tool pot 32 in the axial direction of center axis 122, the operator more easily confirms characters 71 and first design 72 displayed on display surface 54.

Further, center point 131 for an arc or circumference represented by first design 72 is aligned in level with center axis 122 of tool pot 32 positioned at predetermined position J. Thus, when the operator manually attaches a tool to tool pot 32, the operator can easily compare in size the tool that the operator holds with the arc or circumference represented by first design 72 that display unit 51 displays.

Further, display unit 51 has at least a portion opposite to an opening plane defined by opening 42 in magazine cover 41. Thus, through the opening plane defined by opening 42 in magazine cover 41, the operator more easily confirms characters 71 and first design 72 displayed on display surface 54.

Note that a maximum diameter of a tool which can be held by tool pot 32 is a maximum value allowed as the diameter of the tool held by tool pot 32. A maximum diameter of a tool which can be held by tool pot 32 is a diameter of the tool when the center axis of the shank of the tool is set as a center. When a tool having a diameter exceeding a maximum diameter of a tool determined for magazine 10 is attached to tool pot 32, tools interfere with each other between adjacent tool pots 32 or a tool held by tool pot 32 interferes with magazine cover 41 while the tool is conveyed.

The structure of display unit 51 will be described in more detail. Display unit 51 includes a plate material 52. Plate material 52 is a flat plate orthogonal to center axis 122 of tool pot 32. Plate material 52 is an elongate plate having a length in a direction in which the plurality of tool pots 32 are aligned at predetermined position J (i.e., the X-axis direction), and a width in a direction orthogonal to the direction in which the plurality of tool pots 32 are aligned at predetermined position J and to center axis 122 of tool pot 32 (i.e., the Z-axis direction). Of display unit 51, plate material 52 has display surface 54.

Plate material 52 has light transmitting portions 56 (56P, 56Q, 56R). Light transmitting portion 56 is composed of a member capable of transmitting light (or a transparent member).

Display unit 51 further includes a light emitting device 53. Light emitting device 53 is, for example, a backlight including a light source such as an LED. Light emitting device 53 overlaps with plate material 52 in the Y-axis direction. Light emitting device 53 is disposed behind plate material 52 in the front view of magazine 10. Light emitting device 53 emits light behind plate material 52 toward light transmitting portion 56.

Display unit 51 displays first information in a variable display form about a tool held by tool pot 32 and/or conveyer unit 36.

The first information includes at least one of: whether a tool is present or absent in tool pot 32 conveyed to predetermined position J; how a tool is clamped in the tool pot conveyed to predetermined position J; and in what state conveyer unit 36 is operated to convey the tool pot.

Light emitting device 53 emits light toward light transmitting portion 56 in a plurality of light emitting modes. The plurality of light emitting modes in light emitting device 53 may include a light emitting mode in a specific light emitting state selected from turning on light, turning off light, and flashing. The plurality of light emitting modes in light emitting device 53 may include a light emitting mode of a specific light emitting color selected from a plurality of colors.

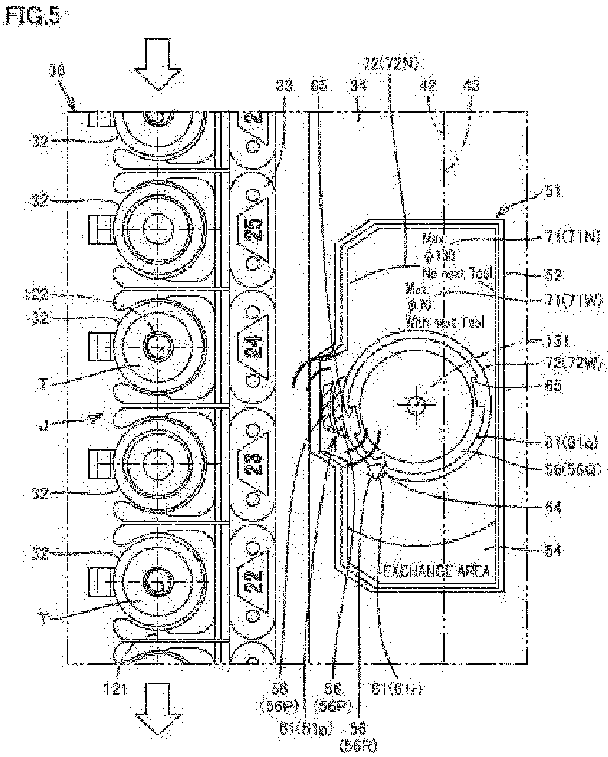

The first information that display unit 51 displays will now be described in more detail. Figs. 5 to 8 are front views indicating a light emitting mode in the light emitting device.

Referring to Fig. 2, when conveyer unit 36 is in the automatic mode, light transmitting portions 56P, 56Q and 56R are turned off. The operator operates first operation unit 46 to switch conveyer unit 36 from the automatic mode to the manual mode. When this is done, and no tool is attached to tool pot 32 No. 23 positioned at predetermined position J, light transmitting portions 56P, 56Q and 56R turn on in blue (in Fig. 2, hatching indicates that the light transmitting portions are turned on in blue). In contrast, when a tool is attached to tool pot 32 positioned at predetermined position J, light transmitting portion 56P turns on in blue.

Referring to Fig. 5, the operator operates first operation unit 46 to identify the number of tool pot 32 to be invoked to predetermined position J, which is currently No. 27, and start conveying tool pot 32. While tool pot 32 is conveyed, light transmitting portion 56P flashes in blue (In Fig. 5, flashing in blue is represented by hatching and a ripply pattern).

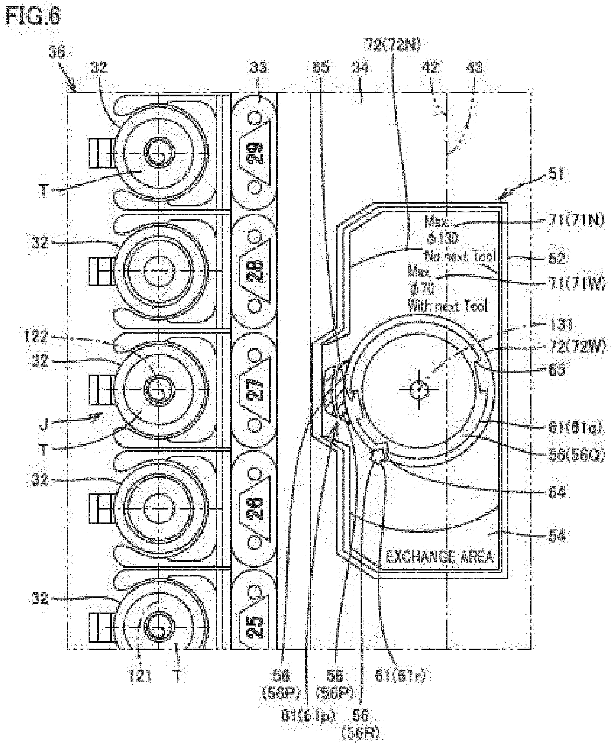

Referring to Fig. 6, tool pot 32 No. 27 arrives at predetermined position J, and conveying tool pot 32 stops. Since a tool T is attached to tool pot 32 No. 27, light transmitting portion 56P turns on in blue (in Fig. 6, hatching indicates that the light transmitting portion turns on in blue).

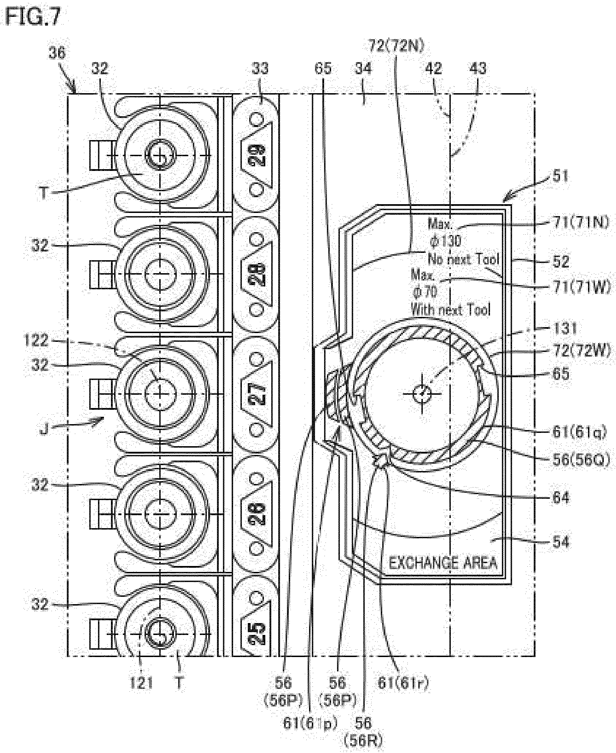

Referring to Fig. 7, the operator operates second operation unit 47 to cause the clamping mechanism unit of tool pot 32 No. 27 to perform the unclamping operation, and thus pulls the tool out of tool pot 32. As a result, light transmitting portions 56P, 56Q, and 56R turn on in blue (in Fig. 7, hatching indicates that the light transmitting portions turn on in blue).

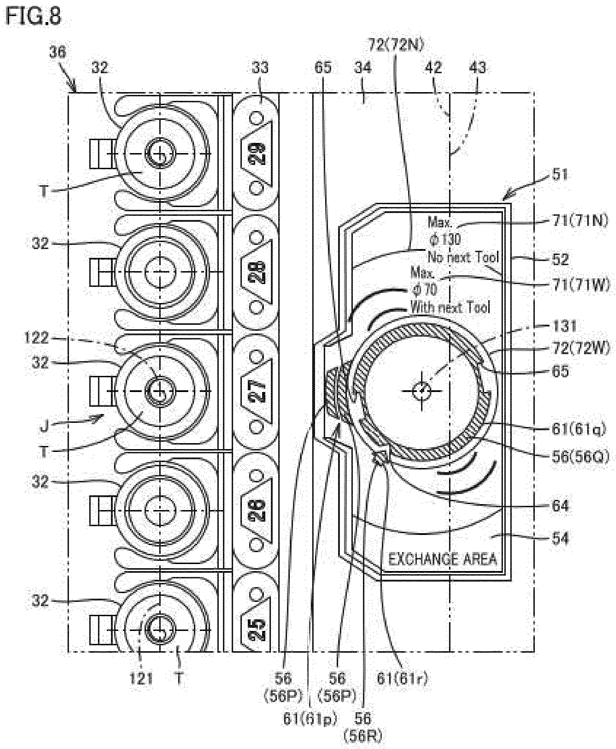

Referring to Fig. 8, the operator attaches a new tool to tool pot 32 No. 27. In doing so, when the tool attached to tool pot 32 is not normally clamped, light transmitting portions 56P, 56Q and 56R flash in red (In Fig. 8, flashing in red is represented by hatching and a ripply pattern).

When the plurality of light emitting modes in light emitting device 53 described above are summarized, a light emitting mode in which light transmitting portions 56P, 56Q and 56R are turned off indicates that conveyer unit 36 is in the automatic mode.

A light emitting mode in which light transmitting portion 56P flashes in blue indicates that tool pot 32 is being conveyed in the manual mode of conveyer unit 36. A mode in which light transmitting portions 56P, 56Q, and 56R turn on in blue indicates that no tool is attached to tool pot 32 positioned at predetermined position J in the manual mode of conveyer unit 36. A mode in which light transmitting portion 56P turns on in blue indicates that a tool is attached to tool pot 32 positioned at predetermined position J in the manual mode of conveyer unit 36.

A light emitting mode in which light transmitting portions 56P, 56Q, and 56R flash in red indicates that a tool in tool pot 32 positioned at predetermined position J is not normally clamped.

According to this configuration, when the operator manually attaches/detaches a tool to/from tool pot 32 the operator can confirm a light emitting mode in light transmitting portion 56 to recognize a mode of operation of conveyer unit 36, how tool pot 32 is conveyed by conveyer unit 36, whether a tool is present or absent in tool pot 32 positioned at predetermined position J, and how a tool in tool pot 32 positioned at predetermined position J is clamped. Thus, the operator can further easily and appropriately perform the manual tool attachment/detachment operation.

A plurality of pieces of the first information may be indicated by providing a difference to an interval in time of flashing light transmitting portion 56. The variable display form of display unit 51 is not limited to the plurality of light emitting modes of light emitting device 53 and may be implemented e.g., by a display panel such as a liquid crystal panel.

Referring to Figs. 2 and 4, plate material 52 further displays second information including at least one of: an indicator indicating predetermined position J; a specification of a shank of a tool held in tool pot 32; and an orientation of the tool held in tool pot 32 that is about an axis of rotation of the tool.

At least one of: the indicator indicating predetermined position J; the specification of the shank of the tool held by tool pot 32; and the orientation of the tool held by tool pot 32 that is about the axis of rotation of the tool is represented by a second design 61 (61p, 61q, 61r). Light transmitting portions 56 (56P, 56Q, 56R) correspond to second design 61 (61p, 61q, 61r), respectively.

The second information that display unit 51 displays will be described in more detail. Plate material 52 further displays second design 61 (61p, 61q, 61r).

Second design 61p is composed of an indicator indicating predetermined position J. Second design 61p is disposed between center axis 122 of tool pot 32 positioned at predetermined position J and center point 131. Second design 61p is disposed between center axis 122 of tool pot 32 positioned at predetermined position J and second design 61q. Second design 61p is composed of a plurality of geometrical figures aligned in the Z-axis direction, each having a predetermined width in a radial direction with respect to center point 131 and extending in the form of a strip in a direction along a circumference about center point 131.

Second design 61q indicates a specification of a shank of a tool held by tool pot 32. Second design 61q is composed of a geometrical figure schematically representing a shape of a shank according to the HSK.

Second design 61q is in the form of a ring about center point 131. At phase positions opposite to each other with center point 131 interposed therebetween is provided a pair of recesses 65 recessed from an outer circumference of the ring radially inwards toward center point 131 and representing a drive key. At a specific phase position about center point 131, there is provided a V-shaped groove 64 recessed in the form of the letter V from the outer circumference of the ring radially inwards toward center point 131.

Second designs 61q and 61r represent an orientation of a tool held by tool pot 32 positioned at predetermined position J, that is about the axis of rotation of the tool. Second design 61r is disposed at the same phase position as V-shaped groove 64 in a circumferential direction with respect to center point 131. Second design 61r is disposed to be radially outer than V-shaped groove 64 with respect to center point 131. Second design 61r is a geometrical figure of an arrow indicating V-shaped groove 64.

Light transmitting portion 56P corresponds to second design 61p composed of an indicator indicating predetermined position J. Light transmitting portion 56Q corresponds to second design 61q composed of a geometrical figure schematically representing a shape of a shank according to the HSK. Light transmitting portion 56R corresponds to second design 61r composed of a geometrical figure of an arrow indicating V-shaped groove 64.

According to this configuration, when the operator manually attaches/detaches a tool to/from tool pot 32 the operator can confirm plate material 52 to recognize a manual tool exchanging position, the specification of the shank of the tool, and the orientation of the tool. Thus, the operator can further easily and appropriately perform the manual tool attachment/detachment operation.

Although Fig. 2 to Fig. 8 show display unit 51 provided to correspond to conveyer unit 36C, the same display unit 51 is also provided to conveyer units 36A and 36B. It should be noted, however, that when predetermined position J is positioned on a right side of display unit 51 in the figure, display unit 51 is inverted in design in the lateral direction.

When magazine 10 and machine tool 100 according to the first embodiment of the present invention described above are summarized in structure, magazine 10 according to the present embodiment comprises: conveyer unit 36 that has tool pot 32 as a plurality of tool holders that each hold a tool detachably and conveys a plurality of tool pots 32; and magazine cover 41 as a cover body that accommodates conveyer unit 36. Conveyer unit 36 allows a tool to be manually attached to and detached from tool pot 32 conveyed to predetermined position J. Magazine 10 further comprises display unit 51 that is provided inside magazine cover 41 and displays first design 72. First design 72 represents an arc or circumference for a diameter corresponding to a maximum diameter of a tool which can be held by tool pot 32.

Machine tool 100 according to the present embodiment comprises magazine 10. According to magazine 10 and machine tool 100 of the first embodiment of the present invention configured as described above, when an operator manually attaches a tool to tool pot 32, the operator can intuitively recognize a maximum diameter of a tool which can be held by tool pot 32 by confirming an arc or circumference represented by first design 72 that display unit 51 displays. Thus, the operator can easily and appropriately perform the manual tool attachment/detachment operation.

Note that the present magazine is not limited to a composite processing machine, and may for example be applied to a lathe comprising a tool rest equipped with an ATC function, a vertical machining center or a horizontal machining center, or an AM/SM hybrid processing machine capable of additively and subtractively manufacturing a workpiece.

### Second Embodiment

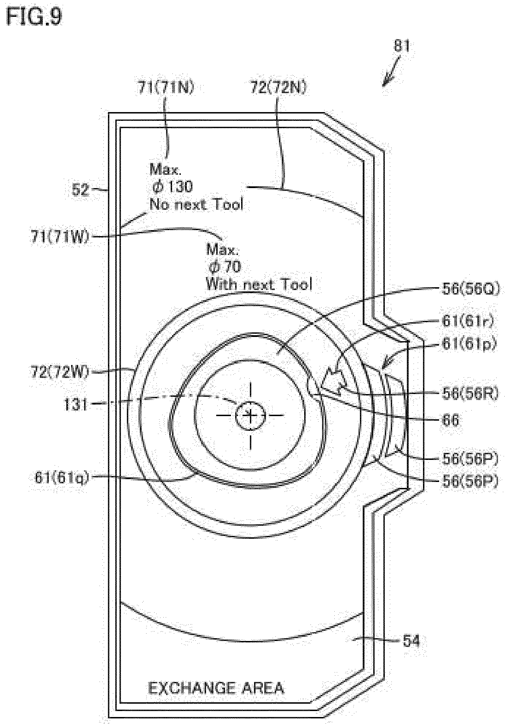

Fig. 9 is a front view of a display unit comprised in a magazine according to a second embodiment of the present invention. Fig. 9 corresponds to Fig. 4 in the first embodiment. The magazine of the present embodiment basically has the same structure as magazine 10 of the first embodiment. Accordingly, the same structure will not be described repeatedly in detail.

Referring to Fig. 9, the magazine of the present embodiment accommodates tools having a shank with a specification according to the CAPTO. The magazine has a display unit 81 corresponding to the CAPTO.

Plate material 52 displays second design 61 (61p, 61q, 61r). Second design 61p is composed of an indicator indicating predetermined position J. In the present embodiment, assuming that, in Fig. 9, predetermined position J is located on a right side, second design 61p is disposed to be laterally opposite to second design 61p of the first embodiment.

Second design 61q is a figure schematically representing a shape of a shank according to the CAPTO. Second design 61q has a triangular, polygonal shape about center point 131. At a specific phase position about center point 131, there is provided a recess 66 recessed from an outer circumference of the polygon radially inwards toward center point 131.

Second designs 61q and 61r represent an orientation of a tool held by tool pot 32 positioned at predetermined position J, that is about the axis of rotation of the tool. Second design 61r is disposed at the same phase position as recess 66 in a circumferential direction with respect to center point 131. Second design 61r is disposed to be radially outer than recess 66 with respect to center point 131. Second design 61r is a geometrical figure of an arrow indicating recess 66.

The magazine of the second embodiment of the present invention configured as described above can similarly achieve an effect described in the first embodiment.

### Third Embodiment

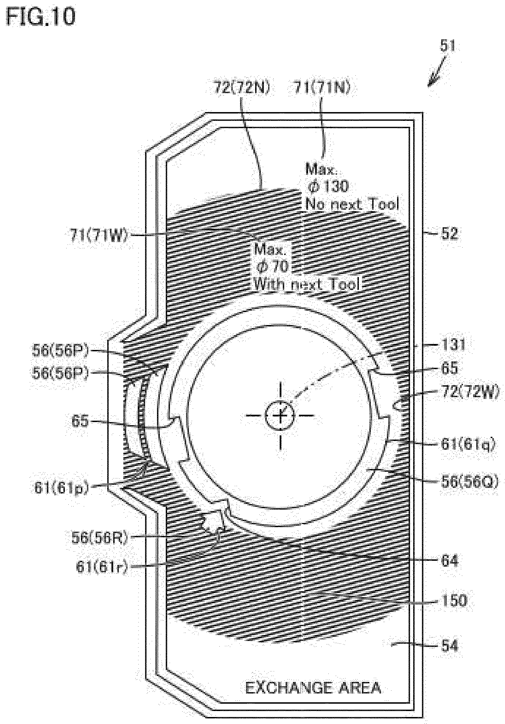

Fig. 10 is a front view of a display unit comprised in a magazine according to a third embodiment of the present invention. Fig. 10 corresponds to Fig. 4 in the first embodiment. The magazine of the present embodiment basically has the same structure as magazine 10 of the first embodiment. Accordingly, the same structure will not be described repeatedly in detail.

Referring to Fig. 10, display unit 51 (or display surface 54) displays first design 72 (72N, 72W). In the present embodiment, first design 72 represents by a hatched area 150 an arc or circumference for a diameter corresponding to a maximum diameter of a tool which can be held by tool pot 32.

Hatched area 150 is an area in the form of a ring about center point 131. Hatched area 150 has an outer circumference having a diameter of 130 mm and an inner circumference having a diameter of 70 mm. First design 72N is an arc represented by a boundary on the side of the outer circumference of hatched area 150, and first design 72W is a circumference represented by a boundary on the side of the inner circumference of hatched area 150.

First design 72 is not limited to hatched area 150 described above, and may represent, for example by a boundary of a color-coded area, an arc or circumference for a diameter corresponding to a maximum diameter of a tool which can be held by tool pot 32.

The magazine of the third embodiment of the present invention configured as described above can similarly achieve an effect described in the first embodiment.

### Fourth Embodiment

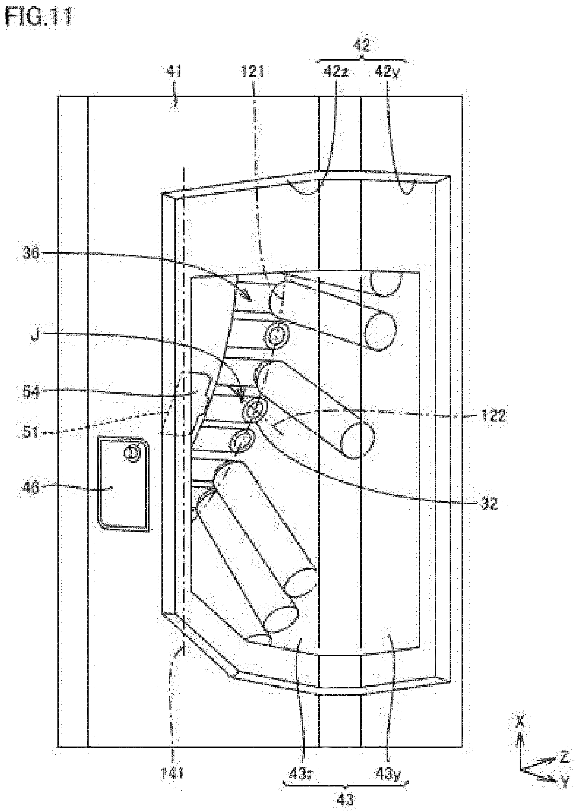

Fig. 11 is a perspective view of a magazine according to a fourth embodiment of the present invention. The magazine of the present embodiment basically has the same structure as magazine 10 of the first embodiment. Accordingly, the same structure will not be described repeatedly in detail.

Referring to Fig. 11, in the present embodiment, conveyer unit 36 is configured to convey a plurality of tool pots 32 along endless path 121. Conveyer unit 36 is provided so that path 121 is located in the X-Y plane. Conveyer unit 36 is configured so that a tool can be manually attached/detached to/from tool pot 32 conveyed to a predetermined position J.

Magazine cover 41 is provided with opening 42 for manually attaching/detaching a tool to/from tool pot 32 conveyed to predetermined position J. Opening 42 has a front opening 42y and a side opening 42z. Front opening 42y is open in the + Y axis direction (or the frontward direction with respect to the machine) and forms an opening plane parallel to the X-Z plane. Side opening 42z is open in the - Z-axis direction and forms an opening plane parallel to the X-Y plane. An end of front opening 42y in the - Z-axis direction is contiguous to an end of side opening 42z in the + Y-axis direction.

Magazine door 43 is disposed in opening 42. Magazine door 43 has a transparent window. Magazine door 43 is provided to be openable and closable between a closed position in which opening 42 is closed and an open position in which opening 42 is opened. Magazine door 43 is supported by magazine cover 41 pivotably about an axis 141 extending in the X-axis direction.

Magazine door 43 includes a front door portion 43y and a side door portion 43z. When magazine door 43 is disposed in the closed position in which opening 42 is closed, front door portion 43y closes front opening 42y and side door portion 43z closes side opening 42z. An end portion of front door portion 43y in the - Z-axis direction is contiguous to an end portion of side door portion 43z in the + Y-axis direction to form a corner portion.

When a tool is manually exchanged, the tool is inserted/removed along center axis 122 of tool pot 32 conveyed to predetermined position J. Center axis 122 of tool pot 32 positioned at predetermined position J is orthogonal to the Z-axis, and extends obliquely downward and intersects the X-axis and the Y-axis obliquely.

Display unit 51 is provided sideways of predetermined position J. Display unit 51 is provided adjacent to predetermined position J in the Z-axis direction. Display surface 54 is composed of a plane orthogonal to center axis 122 of tool pot 32 positioned at predetermined position J. Display surface 54 is opposite to an opening plane defined by front opening 42y in magazine cover 41.

The magazine of the fourth embodiment of the present invention configured as described above can similarly achieve an effect described in the first embodiment.

It should be understood that the embodiments disclosed herein are illustrative and non-restrictive in any respect. The scope of the present invention is defined by the terms of the claims, rather than the above description, and is intended to include any modifications within the scope of the claims.

### INDUSTRIAL APPLICABILITY

The present invention is applied to a magazine that can accommodate a plurality of tools.

### REFERENCE SIGNS LIST

10 magazine, 21 cover body, 22 first door, 23 second door 24, 25 transparent window, 26 side cover, 31 magazine base, 32 tool pot, 33 conveying chain, 34 decorative panel, 36, 36A, 36B, 36C conveyer unit, 37 driving sprocket, 38 driven sprocket, 41 magazine cover 42, 42A, 42B, 42C opening, 42y front opening, 42z side opening, 43, 43A, 43B, 43C magazine door, 43y front door portion, 43z side door portion, 46, 46A, 46B, 46C first operation unit, 47, 47A, 47B, 47C second operation unit, 51, 81 display unit, 52 plate material, 53 light emitting device, 54 display surface, 56, 56P, 56Q, 56R light transmitting portion, 61, 61p, 61q, 61r second design, 64 V-shaped groove, 65 recess, 66 recess 71, 71N, 71W characters 72, 72N, 72W first design, 100 machine tool, 110 processing area, 121,121A, 121B, 121C path, 122 center axis, 131 center point, 141 pivot, 150 hatched area, J predetermined position.

## Claims

1. A magazine comprising:
a conveyer unit (36) that has a plurality of tool holders (32) that each can hold a tool detachably and can convey the plurality of tool holders (32) to a predetermined position (J);
a cover body (41) that accommodates the conveyer unit (36),
the conveyer unit (36) allowing a tool to be manually attached to and detached from the tool holder (32) conveyed to the predetermined position (J); and
a display unit (51) that is provided inside the cover body (41) and is configured to display a first design (72),
the first design (72) representing an arc or circumference for a diameter corresponding to a maximum diameter of a tool which can be held by the tool holder (32).

2. The magazine according to claim 1, wherein
the tool holder (32) conveyed to the predetermined position (J) can receive or can have a tool removed therefrom along a predetermined center axis (122), and
the display unit (51) has a display surface (54) that is composed of a plane orthogonal to an axial direction of the predetermined center axis (122) and can display the first design (72).

3. The magazine according to claim 2, wherein
the display unit (51) is provided sideways of the predetermined position (J), and
the arc or the circumference has a center point (131) aligned in level to the predetermined center axis (122).

4. The magazine according to any one of claims 1 to 3, wherein the display unit (51) is further configured to display the maximum diameter of the tool which can be held by the tool holder (32).

5. The magazine according to any one of claims 1 to 4, wherein
the cover body (41) is provided with an opening (42) that allows a tool to be manually attached/detached to/from the tool holder (32) conveyed to the predetermined position (J), and
the display unit (51) has at least a portion opposite to an opening plane defined by the opening (42) in the cover body (41).

6. The magazine according to any one of claims 1 to 5, wherein the display unit (51) is further configured to display a first information in a variable display form about the tool held by the tool holder (32) and/or the conveyer unit (36).

7. The magazine according to claim 6, wherein the first information includes at least one of: whether a tool is present or absent in the tool holder (32) conveyed to the predetermined position (J); how a tool is clamped in the tool holder (32) conveyed to the predetermined position (J); and in what state the conveyer unit (36) is operated to convey the tool holder (32).

8. The magazine according to claim 6 or 7, wherein the display unit (51) includes:
a plate material (52) including a light transmitting portion (56); and
a light emitting device (53) that emits light from a back side of the plate material (52) toward the light transmitting portion (56) in a plurality of light emitting modes.

9. The magazine according to claim 8, wherein the plurality of light emitting modes include a light emitting mode in a specific light emitting state selected from turning on light, turning off light, and flashing.

10. The magazine according to claim 8 or 9, wherein the plurality of light emitting modes include a light emitting mode of a specific light emitting color selected from a plurality of colors.

11. The magazine according to any one of claims 8 to 10, wherein the plate material (52) further configured to display a second information including at least one of: an indicator indicating the predetermined position (J); a specification of a shank of a tool held by the tool holder (32); and an orientation of the tool held by the tool holder (32) that is about an axis of rotation of the tool.

12. The magazine according to claim 11, wherein
at least one of: the indicator indicating the predetermined position (J); the specification of the shank of the tool held by the tool holder (32); and the orientation of the tool held by the tool holder (32) that is about the axis of rotation of the tool is represented by a second design (61), and
the light transmitting portion (56) corresponds to the second design (61).

13. A machine tool comprising a magazine according to any one of claims 1 to 12.

## Patentansprüche

1. Magazin, umfassend:
eine Fördereinheit (36), die eine Vielzahl von Werkzeughaltern (32) aufweist, von denen jeder ein Werkzeug lösbar halten kann, und die die Vielzahl von Werkzeughaltern (32) zu einer vorbestimmten Position befördern kann;
einen Gehäusekörper (41), der die Fördereinheit (36) aufnimmt,
wobei die Fördereinheit (36) es ermöglicht, ein Werkzeug manuell an dem Werkzeughalter (32) anzubringen und von diesem zu lösen, der zu der vorbestimmten Position (J) befördert wurde; und
einer Anzeigeeinheit (51), die innerhalb des Gehäusekörpers (41) vorgesehen und eingerichtet ist, ein erstes Muster (72) anzuzeigen,
wobei das erste Muster (72) einen Bogen oder einen Kreisumfang mit einem Durchmesser darstellt, der dem maximalen Durchmesser eines Werkzeugs entspricht, das von dem Werkzeughalter (32) gehalten werden kann.

2. Magazin nach Anspruch 1, wobei
der an die vorbestimmte Position (J) beförderte Werkzeughalter (32) ein Werkzeug entlang einer vorbestimmten Mittelachse (122) aufnehmen oder von diesem entfernt werden kann, und
die Anzeigeeinheit (51) eine Anzeigefläche (54) aufweist, die aus einer Ebene orthogonal zu einer axialen Richtung der vorbestimmten Mittelachse (122) besteht und das erste Muster (72) anzeigen kann.

3. Magazin nach Anspruch 2, wobei
die Anzeigeeinheit (51) seitlich der vorbestimmten Position (J) vorgesehen ist, und
der Bogen oder der Kreisumfang einen Mittelpunkt (131) aufweist, der höhenmäßig mit der vorbestimmten Mittelachse (122) fluchtet.

4. Magazin nach einem der Ansprüche 1 bis 3, wobei die Anzeigeeinheit (51) ferner eingerichtet ist, den maximalen Durchmesser des Werkzeugs anzuzeigen, der vom Werkzeughalter (32) gehalten werden kann.

5. Magazin nach einem der Ansprüche 1 bis 4, wobei
der Abdeckkörper (41) mit einer Öffnung (42) versehen ist, die es ermöglicht, ein Werkzeug manuell an dem Werkzeughalter (32), der an die vorbestimmte Position (J) befördert wurde, anzubringen bzw. von diesem zu entfernen, und
die Anzeigeeinheit (51) zumindest einen Abschnitt aufweist, der einer durch die Öffnung (42) im Abdeckkörper (41) definierten Öffnungsebene gegenüberliegt.

6. Magazin nach einem der Ansprüche 1 bis 5, wobei die Anzeigeeinheit (51) ferner eingerichtet ist, eine erste Information über das vom Werkzeughalter (32) und/oder der Fördereinheit (36) gehaltene Werkzeug in einer variablen Anzeigeform anzuzeigen.

7. Magazin nach Anspruch 6, wobei die erste Information mindestens eines der folgenden Elemente umfasst: ob ein Werkzeug in dem zur vorbestimmten Position (J) beförderten Werkzeughalter (32) vorhanden ist oder fehlt; wie ein Werkzeug in dem zur vorbestimmten Position (J) beförderten Werkzeughalter (32) eingespannt ist; und in welchem Zustand die Fördereinheit (36) betrieben wird, um den Werkzeughalter (32) zu befördern.

8. Magazin nach Anspruch 6 oder 7, wobei die Anzeigeeinheit (51) umfasst:
ein Plattenmaterial (52) mit einem lichtdurchlässigen Abschnitt (56); und
eine Lichtemissionsvorrichtung (53), welche Licht von einer Rückseite des Plattenmaterials (52) in Richtung des lichtdurchlässigen Abschnitts (56) in einer Vielzahl von Lichtemissionsmodi emittiert.

9. Magazin nach Anspruch 8, wobei die mehreren Lichtemissionsmodi einen Lichtemissionsmodus in einem spezifischen Lichtemissionszustand umfassen, der aus Einschalten, Ausschalten und Blinken von Licht ausgewählt ist.

10. Magazin nach Anspruch 8 oder 9, wobei die Vielzahl von Lichtemissionsmodi einen Lichtemissionsmodus einer bestimmten Lichtemissionsfarbe umfasst, die aus einer Vielzahl von Farben ausgewählt ist.

11. Magazin nach einem der Ansprüche 8 bis 10, wobei das Plattenmaterial (52) ferner eingerichtet ist, eine zweite Information anzuzeigen, die mindestens eines der folgenden Elemente umfasst: eine Anzeige, die die vorbestimmte Position (J) angibt; eine Spezifikation eines Schafts eines vom Werkzeughalter (32) gehaltenen Werkzeugs; und eine Ausrichtung des vom Werkzeughalter (32) gehaltenen Werkzeugs, die um eine Drehachse des Werkzeugs erfolgt.

12. Magazin nach Anspruch 11, wobei
mindestens eines der folgenden Elemente durch ein zweites Muster (61) dargestellt wird: die Anzeige der vorbestimmten Position (J); die Angabe des Schafts des vom Werkzeughalter (32) gehaltenen Werkzeugs; und die Ausrichtung des vom Werkzeughalter (32) gehaltenen Werkzeugs um die Drehachse des Werkzeugs, und
der lichtdurchlässige Abschnitt (56) dem zweiten Muster (61) entspricht.

13. Werkzeugmaschine, die ein Magazin gemäß einem der Ansprüche 1 bis 12 umfasst.

## Revendications

1. Magasin comprenant :
une unité de transport (36) comportant une pluralité de porte-outils (32) pouvant chacun maintenir un outil de manière amovible et capable de transporter ladite pluralité de porte-outils (32) vers une position prédéterminée ;
un corps de couvercle (41) qui loge l'unité de transport (36),
l'unité de transport (36) permettant à un outil d'être fixé et détaché manuellement du porte-outil (32) transporté vers la position prédéterminée (J) ; et
une unité d'affichage (51) qui est prévue à l'intérieur du corps de couvercle (41) et qui est configurée pour afficher un premier motif (72),
le premier motif (72) représentant un arc ou une circonférence pour un diamètre correspondant au diamètre maximal d'un outil pouvant être maintenu par le porte-outil (32).

2. Le magasin selon la revendication 1, dans lequel
le porte-outil (32) acheminé vers la position prédéterminée (J) peut recevoir ou se faire retirer un outil le long d'un axe central prédéterminé (122), et
l'unité d'affichage (51) comporte une surface d'affichage (54) qui est constituée d'un plan orthogonal à une direction axiale de l'axe central prédéterminé (122) et qui peut afficher le premier motif (72).

3. Le magasin selon la revendication 2, dans lequel
l'unité d'affichage (51) est disposée latéralement par rapport à la position prédéterminée (J), et
l'arc ou la circonférence comporte un point central (131) aligné horizontalement avec l'axe central prédéterminé (122).

4. Le magazine selon l'une quelconque des revendications 1 à 3, dans le où l'unité d'affichage (51) est en outre configurée pour afficher le diamètre maximal de l'outil pouvant être maintenu par le porte-outil (32).

5. Le magasin selon l'une quelconque des revendications 1 à 4, dans lequel
le corps de couvercle (41) est muni d'une ouverture (42) qui permet de fixer/détacher manuellement un outil du porte-outil (32) acheminé vers la position prédéterminée (J), et
l'unité d'affichage (51) comporte au moins une partie située en face d'un plan d'ouverture défini par l'ouverture (42) dans le corps de couvercle (41).

6. Le magasin selon l'une quelconque des revendications 1 à 5, dans lequel l'unité d'affichage (51) est en outre configurée pour afficher une première information sous une forme d'affichage variable concernant l'outil maintenu par le porte-outil (32) et/ou l'unité de transport (36).

7. Magasin selon la revendication 6, dans lequel la première information comprend au moins l'un des éléments suivants : si un outil est présent ou absent dans le porte-outil (32) acheminé vers la position prédéterminée (J) ; comment un outil est serré dans le porte-outil (32) acheminé vers la position prédéterminée (J) ; et dans quel état l'unité de transport (36) fonctionne pour acheminer le porte-outil (32).

8. Magasin selon la revendication 6 ou 7, dans lequel l'unité d'affichage (51) comprend :
un matériau en plaque (52) comprenant une partie transmettant la lumière (56) ; et
un dispositif d'émission de lumière (53) qui émet de la lumière depuis une face arrière du matériau en plaque (52) vers la partie transmettant la lumière (56) selon une pluralité de modes d'émission de lumière.

9. Le magazine selon la revendication 8, dans lequel la pluralité de modes d'émission de lumière comprend un mode d'émission de lumière dans un état d'émission de lumière spécifique choisi parmi l'allumage de la lumière, l'extinction de la lumière et le clignotement.

10. Le magazine selon la revendication 8 ou 9, dans lequel la pluralité de modes d'émission de lumière comprend un mode d'émission de lumière d'une couleur d'émission de lumière spécifique choisie parmi une pluralité de couleurs.

11. Le magasin selon l'une quelconque des revendications 8 à 10, dans lequel le matériau de plaque (52) est en outre configuré pour afficher une deuxième information comprenant au moins l'un des éléments suivants : un indicateur indiquant la position prédéterminée (J) ; une spécification d'une tige d'un outil maintenu par le porte-outil (32) ; et une orientation de l'outil maintenu par le porte-outil (32) qui s'effectue autour d'un axe de rotation de l'outil.

12. Le magasin selon la revendication 11, dans lequel
au moins l'un des éléments suivants est représentée par un deuxième motif (61): l'indicateur indiquant la position prédéterminée (J) ; la spécification de la tige de l'outil maintenu par le porte-outil (32) ; et l'orientation de l'outil maintenu par le porte-outil (32) autour de l'axe de rotation de l'outil, et
la partie transmettant la lumière (56) correspond au deuxième motif (61).

13. Machine-outil comprenant un magasin selon l'une quelconque des revendications 1 à 12.
